# EUROPEAN PATENT SPECIFICATION

(11) **EP 1 812 143 B1**
(45) Date of publication and mention of the grant of the patent: **16.07.2008**
(21) Application number: 05756840.4
(22) Date of filing: 30.06.2005
(51) Int. Cl.: B01D 53/75

(54) **POLLUTED AIR CLEANER AND RELATIVE PURIFYING PROCESS**
VORRICHTUNG ZUR REINIGUNG VON VERSCHMUTZTER LUFT UND ZUGEHÖRIGES REINIGUNGSVERFAHREN
PURIFICATEUR D'AIR POLLUE ET PROCEDE DE PURIFICATION CORRESPONDANT

(30) Priority: 01.07.2004 IT RM20040330
(43) Date of publication of application: 01.08.2007
(73) Proprietor: BCP ENGINEERING S.R.L., 00144 Roma (IT)
(72) Inventor: CIRILLO, Francesco, I-00152 Roma (IT); PIMPINELLI, Remo, I-00152 Roma (IT)
(74) Representative: Cinquantini, Bruno
(86) International application number: PCT/EP2005/053089
(87) International publication number: WO 2006/003169

(56) References cited:
- EP-A- 1 040 863
- WO-A-95/22395

## Description

### Field of the invention

The present invention refers to a polluted air cleaner and a relative purifying process, adapted for the abatement of atmospheric pollutants in different types of environment.

### Background Art

Although the problem of the abatement of atmospheric pollutants forms the object of studies by many major international research centres, the solutions made available by current technological developments are subject to limitations which, in actual fact, make them not very practicable.

In fact, technological solutions exist which focus on the abatement of only one (or some) of the pollutants to be abated. For example, a solution for the abatement of nitrogen dioxide (NO₂), forming inside road and motorway tunnels due to vehicle traffic, was recently presented in Japan. Besides treating only one of the pollutants present, this solution requires periodic replacement of the chemically active unit, which works by absorbing the polluting compound and is thereby also limited by operating and maintenance restrictions. Another example is composed of coverings (or pavings) to which catalysts for photoinduced transformations are added; in this case the limitation derives from the fact that the catalysts added to the coverings or pavings are only active for some of the pollutants to be abated and, moreover, although it is true that as a rule this type of solution does not cause problems of maintenance and operation, it is also true that the ratio between volume of air treated and surface of the covering (or paving) required is extremely low and, moreover, decreases up to annul itself as the light in the environment decreases. For applications in the open air, a further example is provided by the technological solution consisting in filtration of the air to be purified through volumes of soil suitably treated from the chemical and biological viewpoint. Also in this case extremely low efficiency is obtained in relation to the volumes of soil to be treated and, moreover, this efficiency depends greatly on the condition of the soil, which is influenced by weather conditions and by the efficacy of the filtering system, which requires careful maintenance.

There are also solutions based on filtering systems, although they too have limitations which greatly reduce their practical use. In fact, dry filters, viscous filters and electrostatic filters lose efficacy as the material withheld builds up, and therefore require frequent maintenance operations and above all are ineffective for many of the pollutants contained in the gas phase. Dynamic filters lose their efficacy as the mass of particles to be treated decreases. Wet filters and wash tunnels are only suitable for specific applications, as they require the use of volumes that increase in size in proportion to the decrease in size and concentrations of particles to be abated.

Moreover, it must in general be noted that the various filtering systems are not effective simultaneously on all the particulate or gaseous substances and particles found in the polluted air.

There are known also a process and numerous apparatus functioning on the basis of this process which were the object of the Italian patent applications RM94A000085, RM95A00230 and RM95A000238. A technological process for purifying air and a respective apparatus in a transportable (mobile) form are known from the patent US5676913.

The technological process patented at the time (and relative apparatus) substantially relates to the sequence of the following steps:
- a suction step of polluted air to be treated from the environment, by means of a centrifugal fan and suitable ducting;
- an oxidation step, produced by feeding the polluted air through a battery of UV lamps with a wavelength below 250 millimicrons;
- a wash step in which the flow of polluted and oxidised air is accelerated to flow at high speed through a labyrinth formed of sharp inversions in the direction of motion; inside the labyrinth, water barriers are formed by means of high pressure spray nozzles through which the flow of air to be treated is forced to pass in its high speed route; the wash water can be more or less chemically active according to the presence in the labyrinth of catalysts based on Cr₄ or NiO to accelerate oxidation of NOₓ to NO₂ and to promote absorption in liquid phase;
- a deceleration step of the flow of air, produced by means of a settling chamber;
- a final catalytic filtering step in which the flow of air passes through a catalyst bed in which the remaining carbon oxide and ozone are respectively transformed into carbon dioxide and oxygen; the catalysts indicated are oxides of a metal chosen from those belonging to the first series of the transition group of the periodic table, or based on Pt or other noble metals to which ZnO, MnO₂ CuO, and the copper chromite CuCr₂O₄ are added.

The technological process (and relative apparatus) patented at the time represented, and still represents, a considerable step forward in the search for optimal solutions to the problem of purifying polluted air. Nonetheless, over the last few years the same Inventors, observing and recording through time the operation of the apparatus produced, have had the chance to detect some limitations which induced them to continue performing in-depth research into this matter.

In particular, it was noted that the efficacy of the apparatus produced was maximum for the pollutants concentrations taken in consideration for sizing, but this decreased rapidly as said concentrations deviated from the hypothesized values. For example, the efficacy of an apparatus produced on the basis of a sizing which hypothesized concentrations belonging to the "danger level" for urban areas, was halved when the pollutant concentrations deviated even by only 15% (more or less) from the hypothesized values. In depth studies showed that this undesirable effect is due to the fact that in the wash section, where, as described above, polluted air flows at high speed through a labyrinth passing through barriers of pressurized water, the effect of purification is prevalently inertial, i.e. due to pollutants being drawn in the wash liquid, and only a minimal part is due to the development of chemical oxidation and reduction reactions. In fact, the air to be treated employed less than one second to flow through the labyrinth and this time is not sufficient to allow the desired transformations to reach chemical equilibrium. The inertial effect is due to the impact of the polluting particles with the water barriers; as known, this impact is regulated by Gaussian statistical distribution.

This explains why for lower concentrations than those one of the project the polluting particles were not sufficient in number to give rise to the maximum number of impacts (and therefore of maximum drawing); instead for higher concentrations the water particles were insufficient in number to draw the excess pollutants. In fact, in the previously patented technological process, chemical transformations continued up to reach equilibrium only in the recycling water circuit and tank: this also explains the limited efficacy in the abatement of CO₂.

The fact that in the wash section the inertial effect was largely prevalent over the chemical one, caused another limitation: the purification efficacy of the apparatus decreased in relation to the decrease in the mass of polluting particles to be abated. Particularly evident effects of this limitation were found in the abatement of dusts and particulate which was fully efficacious for pollutants classifiable as PM25, while its efficacy was halved for PM10 dusts.

Another important limitation consists in the fact that the efficacy of the apparatus decreased considerably in relation to the decrease in temperature and the increase in humidity of the air to be treated.

This stems from the fact that the technological process patented at the time controls neither the temperature nor the humidity of the air to be treated, while the chemical reactions of equilibrium and catalysis are sensitive to both these variables.

Moreover, the process of adding chemicals to neutralize the compounds absorbed in the wash water was performed by adding soda or lime to the wash water collection and recycling tank. However, as the compounds are strong bases, the salts formed tended to re-dissolve and to be re-introduced into the process fluid, with a decrease in the efficacy of the wash process in relation to the increase in the operating time and in the concentration of compounds present in the water. Moreover, the highly humid air brought into contact with the catalyst the reaction residues, which therefore tended to pollute it rapidly and made frequent regenerations necessary.

In general, being practically devoid of the possibility to regulate the process variables, (with the exception of the pH value of the wash water), the technological process patented at the time loses efficacy as soon as the real operating conditions deviate from the ideal project conditions.

Moreover, the Inventors were able to detect a decrease in the performances of the apparatus through time, which was found to be due to the loss of efficiency of the oxidation section. Apparatus produced on the basis of the technological process patented at the time have an oxidation section positioned immediately downstream of the suction section and upstream of the wash section. In this section the polluted air (not yet treated) passes through a battery of UV lamps emitting with a wavelength below 250 millimicrons. Although the lamps are suitably protected, in order to perform their function they must come into contact with the air, as a result, through time the pollutants and impurities contained in the air are deposited on the surfaces of the lamps, opacifying them and decreasing their performances, especially in the range of frequencies involved in the process. Due to this limitation oxidation of the particles to be treated decreases through time.

Added to the aforesaid limitations is the fact that over the years the awareness of users (citizens) on the subject of air pollution has increased and is focused on needs which were previously inexistent. An example of this is CO₂, which until recently was not considered among the pollutants to be abated as it was not considered a health hazard for citizens, while currently the reduction of CO₂ emissions in the atmosphere is the subject of international agreements, as this pollutant is considered harmful to the wellbeing of the planet. While abatement of PM25 dusts was considered sufficient at the time in which the patented technological process was introduced, today it is necessary to abate PM10 dusts and it is foreseen that the abatement of PM2,5 dusts will soon be established. This is also the case of the use of NiO based catalysts which are no longer recommended today, while at that time they were allowed. Finally, there is an increasing request to abate pollutants of biological nature, such as bacteria, viruses and spores and this service was not provided in the previously patented apparatus and process.

### Summary of the invention

The object of the present invention is to produce a polluted air cleaner capable of overcoming all the aforesaid drawbacks which occur using prior art purifying systems.

The purifying system for air polluted by chemical, physical and biological pollution, forming the object of the invention, comprises, in accordance with claim 1, air suction means, an oxidation chamber, a catalyst bed, characterized in that there is provided a mixing chamber for polluted air and oxidized air, a mist reactor, a sterilizer, a hydrodynamic dehumidifier, a dry reactor in which said catalyst bed is arranged.

The object of the present invention is also attained by means of a process for purifying air polluted by chemical, physical and biological pollution, using the aforesaid cleaner, which in accordance with claim 23 comprises the steps of:
a) sucking, by means of suction means polluted air inside a mixing chamber;
b) analyzing said polluted air, using a real time analyzer, and sending said values of first parameters to control means to regulate process parameters;
c) producing a flow of air, in said mixing chamber, comprising said polluted air and oxidized air coming from an oxidation chamber;
d) feeding said flow into a mist reactor so that the polluted particles transported by the flow are absorbed by a chemically active atomized aqueous solution;
e) sterilizing the flow, said flow lapping a second battery of lamps of a sterilizer;
f) dehumidifying the flow by means of a hydrodynamic dehumidifier;
g) feeding the flow to a dry reactor in which, by means of a valve, a first part of the flow is drawn off and sent to the oxidation chamber, and a second part is taken to predetermined conditions of relative humidity by means of a second heat exchanger;
h) feeding said second part of the flow through a catalyst bed in order to oxidize remaining CO to CO₂ and reduce O₃ to O₂, present in the pollutants, even at low temperatures.

Comparison with known cleaners show the following differences which highlight the advantages of the cleaner and of the relative purifying process of the invention. The first section, in the known cleaners, is a suction section containing a suction fan which sucks in polluted air to be treated from the environment.

Instead, in the cleaner of the invention the first section is a mixing chamber where the polluted air sucked in from the environment is intimately mixed with clean air carrying nascent oxygen, thereby preparing the flow for the abatement processes in the subsequent sections.

immediately downstream of the suction section in the known cleaners, there is provided the oxidation section in which polluted air, carrying particles and impurities, flows through a battery of UV lamps emitting with a wavelength below 250 millimicrons, exposing said lamps to a progressive loss of efficiency by opacification.

Instead, in the cleaner of the invention, a mist reactor is positioned immediately downstream of the mixing chamber and in it the intimate contact and absorption of the pollutants by water particles, atomized by specific atomizers, occurs in presence of suitable catalysts deriving from oxidized compounds of Zn, Fe or Cu, or combinations thereof; the polluted air passes through the mist reactor at low speed; the permanence time of the polluted air in the mist reactor, which is greater than 1 second and normally, in the version preferred by the inventors, equal to or greater than 5 seconds, allows the chemical reactions of transformation and abatement of the pollutants to reach equilibrium; atomization is regulated so that the flow of air reaches 100% RH, irrespective of the humidity in the air sucked in from the environment; the variations in the direction of the flow of air, caused by walls dampened by the mist, produce absorption of the pollutants of particulate nature without requiring acceleration of the flow from low to high speed and therefore remaining efficacious also for particles with a very small mass, such as PM2,5 dusts.

In the known cleaners the third section, downstream of the oxidation section, is the wash section, where, as already mentioned, the air to be treated is accelerated from low to high speed and purification from pollutants is obtained prevalently by inertial effect; in this section batteries of high pressure spraying nozzles form barriers of wash water, but the humidity in the passing flow of air is not controlled, and therefore it continues to depend on the temperature and on the humidity of the air sucked in from the environment.

In the cleaner of the invention, the third section is the sterilization section (not present in the known cleaners) in which the flow of air, already purified of the particulate elements and largely of the pollutants, laps a battery of lamps emitting with a wavelength of 254 nm (different from that of the lamps used in the known cleaners) causing the destruction of viruses, bacteria and spores.

The fourth section for the known cleaners is composed of a settling tank where the flow is decelerated to separate any water particles transported and is filtered in presence of catalysts which promote oxidation of the remaining CO to CO₂ and reduction of O₃ to O₂, the efficiency of which declined rapidly due to the presence of air with a high degree of humidity which brought the reaction residues into contact with the catalyst, thereby tending to pollute it rapidly and making frequent regenerations necessary.

Differently, in the cleaner of the invention the fourth section is composed of a dehumidification section (not present in the known cleaners) in which the flow of air, which has been saturated with water in the mist reactor, is taken to a controlled RH value.

The mechanical and hydraulic structure of the circuit for the collection, recycling, addition of chemicals and injection of the process water is similar, although also in this case there are characterizing differences. In particular, the known cleaners use high pressure sprayers, while the cleaner of the invention is provided with low pressure atomizers; the chemical additives and reaction catalysts are also different in the two cases as shall be described in detail hereunder, and moreover, in the cleaner of the invention occurs a regeneration of the process fluid that, by passing though various treatment stages, is fed to the mist reactor always in the same chemical-physical conditions.

It must be noted that at this point all the sections of the known cleaners have been taken into consideration, while an important part of the sections forming the cleaner of the invention is still to be analyzed.

In fact, downstream of the dehumidification section the cleaner of the invention has a dry reactor which is composed of a settling zone, a drawing off section, a heating section and a catalyst bed and includes control of the temperature and humidity parameters.

Important steps of the purifying process take place in the dry reactor. These are: control of the temperature and relative humidity of the flow by heat exchanger controlled on the basis of the temperature and RH values measured in the air sucked in from outside (not present in the known cleaners); drawing off of part of the flow (not present in the known cleaners); oxidation of the remaining CO to CO₂ and reduction of O₃ to O₂ obtained by means of catalysts which, although containing Pt in extremely small percentages, unlike the known cleaners, base their efficacy on transition between the allotropic states of Fe.

The control of the flow temperature (not present in the known cleaners), together with prior dehumidification, makes the purifying process independent on the variations in temperature and humidity in the ambient air sucked in.

Drawing off a modifiable quantity of flow from a zone in which it has been devoid of the majority of pollutants, including all those of particulate nature, provides a quantity of "clean" air which becomes the vehicle for the transfer of nascent oxygen re-introduced upstream of the purifying process to promote the reactions that take place in the mist reactor.

Moreover, in the cleaner of the invention the oxidation section operates on the quantity drawn off from the flow in a modifiable quantity; consequently the lamps (emitting with a wavelength of 185 nm) remain clean and the quantity of nascent oxygen introduced into the purifying process does not decline through time and can be regulated by acting on the number of lamps operating and on the quantity drawn off from the flow.

With regard to the possibility of controlling and regulating the process variables, while in the known cleaners only the pH of the wash solution can be controlled, the cleaner of the invention comprises an integrated system for the regulation and control of all process variables: quantity, temperature and humidity of the flow to be treated, pH and temperature of the solution in the mist reactor, quantity of nascent oxygen introduced into the flow for oxidation of the pollutants, concentration of oxygen for bactericidal effect. Thanks to this integrated system of regulation and control, unlike the known cleaners, the performances of the cleaner of the invention are largely insensitive to variations in the environmental operating conditions (self-adaptive effect).

Finally, in the cleaner of the invention, treatment of the process liquid does not take place simply by adding lime or soda to the collection tank, controlling only the pH; in fact, the liquid recovered is collected in the multistage regenerator and undergoes various successive treatments (to be described hereunder) to allow separation of the various compounds, both light and heavy, eliminated from the polluted air; the process liquid is thereby kept in ideal chemical-physical conditions, unlike the known cleaners in which after a certain period of time, continuous use of the liquid caused a decline in the performances of the wash phase.

### List of the Figures

Further advantages that can be obtained with the present invention will become clearer, to a person skilled in the art, from the following detailed description of a non-restrictive embodiment of a polluted air cleaner with reference to the following Figures, in which:

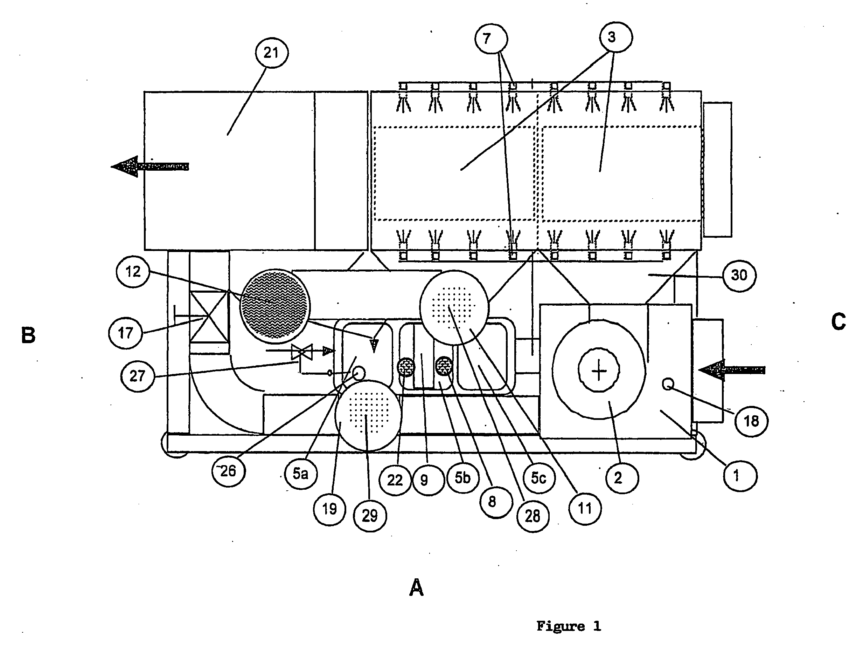

Figure 1 schematically shows the plan view of the cleaner of the invention, in which the points A, B and C are indicated;

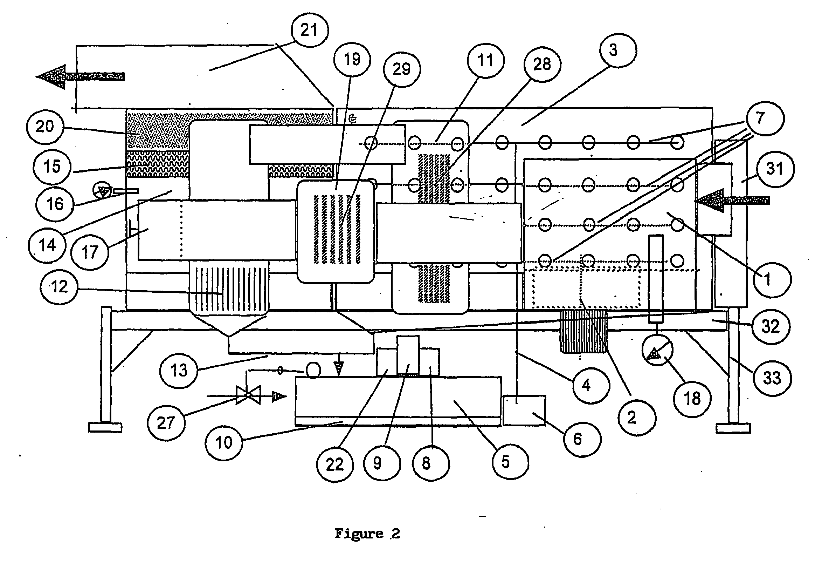

Figure 2 schematically shows the perspective viewed from A.

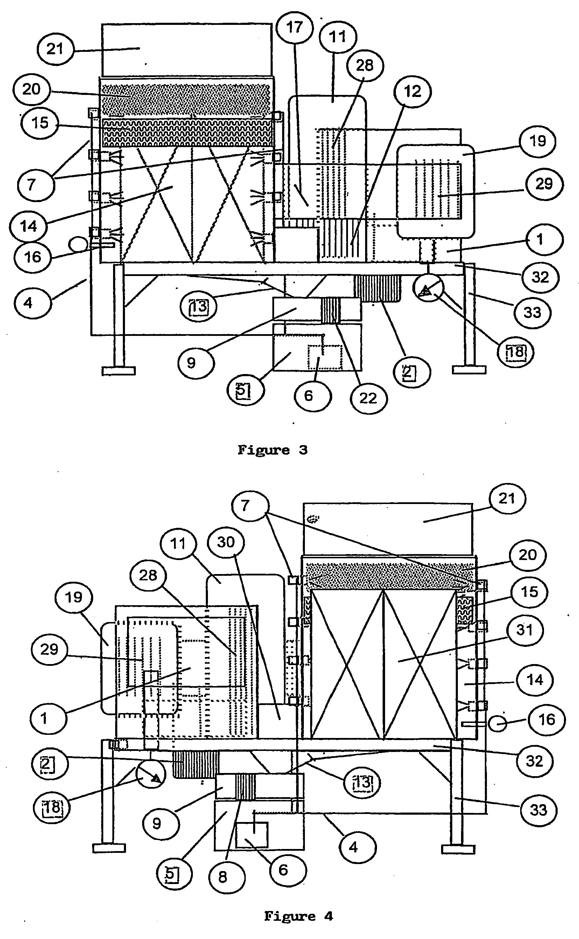

Figure 3 schematically shows the perspective viewed from B.
Figure 4 schematically shows the perspective viewed from C.

### Description in detail of a preferred embodiment of the invention

### Description of the purifying process.

An electric suction fan 2 operates in a mixing chamber 1 and is regulated by an inverter. By means of the recycling circuit, the carrier part of the flow, drawn off from the dry reactor 14 and which has passed through the oxidation chamber 19, flows in the same mixing chamber 1. Through a suitably shaped conveyor, the flow of air to be treated, mixed in controlled proportion with the flow of air drawn off, suitably charged with nascent oxygen, in a quantity regulated on the basis of the properties of the inflowing air, starts a first step to oxidize the polluting compounds present, before entering the mist reactor 3 and passing therethrough at low speed employing a time greater than 1 s and preferably, in the embodiment preferred by the inventors, greater than or equal to 5 s. Inside the mist reactor 3 batteries of low pressure atomizers 7 are active, in a number depending on the sizing of the practical embodiment, served by a distribution circuit 4 and by an electric pump 6 which sucks in from the multistage regenerator 5. Besides the necessary make-up, the multistage regenerator 5 collects the liquid from the discharge outlet 13 of the mist reactor 3 and of the hydrodynamic dehumidifier 12. The temperature of the liquid in the multistage regenerator 5 is controlled by means of the exchanger 10 and, by means of the pH-meter 8, the pH of the solution is controlled activating the metering-pumps system 9 which injects the necessary quantity of reagents into the regenerator, where the stirrer 22 is operating. Inside the mist reactor 3, the atomizers 7 cause intimate contact between the liquid and the polluted air with absorption of the majority of pollutants contained in the flow of air, which thereby pass into the liquid phase. The action of catalysts operating wet and based on oxidized compounds of Zn, Fe or Cu, or combinations thereof, in presence of nascent oxygen promotes completion of oxidation of NOₓ and of the Sulphur oxides present in the flow of air, which are absorbed together with CO₂ by the particles of atomized water.

In the mist reactor 3 the flow of air reaches a value of 100% of relative humidity, irrespective of the conditions of humidity in the air sucked in from outside, while the excess water present tends to adhere to the walls and is subsequently recovered when it falls; moreover, variations in the direction of the flow of air, caused by the walls dampened by the mist, produce absorption of the pollutants of particulate nature without requiring acceleration of the flow from low to high speed, the cleaner remaining efficacious also for particles with an extremely small mass, such as PM2,5 dusts.

The water recovered from the mist reactor 3 and from the hydrodynamic dehumidifier 12 ends up in the multistage regenerator 5. The multistage regenerator is composed of a series of tanks positioned one after another, and in particular in a number of 3 in the embodiment preferred by the inventors, in the first of which, called collection tank 5a, separation of the particles and oils present in the recovery water takes place by means of flocculants, which separate them from the rest of the liquid or fluid. The liquid is then sent to a second tank, called reaction tank 5b, where the gases absorbed in water while passing through the mist reactor 3 and which have undergone natural transformation into the various acid compounds, are transformed into insoluble saline compounds through the use of weak bases, such as barium sulphates and carbonates, preferring those that give rise to heavy crystals to promote mechanical separation through deposition, filtration or stirring. The third tank, called reactivation tank 5c, is used to restore the conditions of the water to be returned to the circuit which leads to the atomizers of the mist reactor by means of an electric pump 6. Water is reactivated by the direct introduction of hydroxides of strong bases such as NaOH or Ca(OH)₂ or oxides that give rise to the formation of strong bases in order to promote absorption of new gases in water during the subsequent cycle. In the third tank, called reactivation tank 5c, a stirrer 22 keeps the water moving to promote dissolution of the compounds and a pH-meter 8 continuously checks the pH value, controlling the metering pumps system 9. The metering pumps system 9 is regulated so that the chemical composition of the solution is constantly restored, compensating the reagents which for various reasons have been consumed in the other steps of the purifying process. The tanks are communicating with one another; therefore the level of water is maintained by a single float 26 which controls the intake valve of the makeup water 27. The exchanger 10 also constantly restores the fluid temperature before it is sent to the mist reactor 3.

After delivery from the mist reactor 3 the flow is fed into the sterilizer 11, where it passes through a battery of lamps 28 emitting with a wavelength of 254 nm; the number of lamps in the battery depends on the quantity and on the type of installation for which sizing of the practical application is defined. The emission wavelength of the lamps is the one offering the maximum germicide effect highly lethal for bacterial, viruses and spores.

Downstream of the sterilizer 11, the flow passes into the hydrodynamic dehumidifier 12; this is a commercial hydrodynamic dehumidifier sized so that, by operating on the saturated flow of water, the quantity of water which passes beyond the hydrodynamic dehumidifier is a function only of the temperature of the flow of air.

The water separated by the hydrodynamic dehumidifier is collected and sent for recycling to the multistage regenerator 5.

Beyond the hydrodynamic dehumidifier 12 the flow of air, which contains a quantity of water which is a function only of the temperature, passes into the dry reactor 14, from which a quota of the flow, in a quantity modifiable by means of the valve 17, is drawn off and sent to the oxidation chamber 19.

In the oxidation chamber 19, the quota of flow drawn off laps a battery of lamps 29, emitting with a wavelength of 185 nm, and is thereby charged with nascent oxygen before being fed to the mixing chamber 1, from where it returns to circulation. The quantity of nascent oxygen that is fed into circulation to participate in the purifying process can be regulated by varying the number of lamps operating, and its concentration can be regulated by varying the quantity drawn off. It must be noted that the air lapping the lamps has already been purified from chemical pollutants, from bacteria, viruses and spores, as well as from particles: this advantageously prevents deposits from forming on the surfaces of the lamps, which would decrease their performance through, time.

The part of flow which is not drawn off passes through the catalyst bed 20 of the dry reactor 14. Inside the dry reactor 14 the temperature of the flow is controlled by means of the heat exchanger 15, in order to reach the optimal RH value for the subsequent reactions, irrespective of the temperature and RH values of the polluted air sucked in from outside.

The flow of air, with controlled temperature and humidity, passes through the catalyst bed 20; this unit is composed of a layer (of a thickness sized according to the characteristics of the practical application to be obtained) formed by pellets preferably, in the solution chosen by the inventors, in the form of spheres of rough material with a suitable diameter so that motion of the flow in the interstices corresponds to a Reynolds number between 100 and 300. The surface of the aforesaid spheres or pellets is coated with catalyst which is preferably based on elements belonging to the transition groups and in particular to combinations of noble metals such as Pt, Pd and Au with transition elements belonging to the 4th period and in particular Mn, Ti and Fe which are capable of fully exploiting their ability to assume several oxidation states passing from one oxidation state to another with minimum energy variations.

In some embodiments of the cleaner the catalyst bed 20 and the heat exchanger 15 can coincide in the same structure; in fact, both said catalyst bed 20 and said heat exchanger 15 can be produced simultaneously in the form of catalyst radiator, i.e., with the structure of a common radiator which has heat exchange surfaces coated in catalyst according to normal coating technology or the like.

The flow delivered from the catalyst bed 20 is collected by the outlet conveyor 21 and from here discharged outside.

The control system of the purifying process is managed by an electronic processor which collects the data supplied by the real time analyzer 18 and by the sensor 16 and controls the actuators of the set-up variables inside the purifying process.

In particular, the real time analyzer 18 measures, in the quantity of air sucked in from outside, the temperature, the RH and the concentrations of CO, CO₂, NOₓ, SO₂, unburned hydrocarbons, particulate and PM10 and PM2,5 dusts, besides other pollutants which can be added time by time in practical applications. On the basis of the measurement of concentrations detected, the electronic processor calculates in real time the necessary quantity of nascent oxygen for the purifying process, controls switch-on of the corresponding number of lamps in the oxidation chamber 19 and switches on the actuator that regulates opening of the valve 17; it determines the quantity to be processed by the suction fan and consequently regulates the inverter; moreover, it calculates the quantity of reagent to be fed into the liquid which is atomized in the mist reactor 3 and the relative pH to which the counter-reaction of the injection circuit of the reagent 9 is regulated; finally, it calculates the optimal temperature for the liquid to be atomized and controls the exchanger 10 as a consequence.

The sensor 16 measures the temperature and the RH of the flow before it enters the catalyst bed 20; if the values measured differ from those set, the processor calculates and controls the variation of the thermal load by the heat exchanger 15 which allows the deviation detected to be cancelled.

The integrated control system makes the purifying process self-adaoting, i.e. largely insensitive to variations of the environmental conditions in which the cleaner is operating.

Description of an embodiment preferred of the cleaner.

The purifying process described above can be implemented according to various constructional forms in relation to the foreseen practical application. The same applies for sizing of the component parts of the cleaner which depends on the quantity of air to be treated and on the foreseen distribution of the pollutants concentrations.

The figures show a schematic representation of a cleaner in an embodiment preferred by the inventors. This is a cleaner for the treatment of 5400 m³/h of air with pollution characterised by the following maximum concentration values: CO< 150 ppm, CO₂ < 3200 ppm, SO₂ < 2 ppm, NO₂ < 150 ppm, HC < 50 mg/m³, PM10 < 60 mg/m³, PM2,5 < 20 mg/m³. The mixing chamber 1 contains an electric suction fan 2, operated by an asynchronous motor controlled by inverter, which processes the quantity required by the purifying process.

The quota of the flow which was drawn off from the dry reactor 14 and which has passed through the oxidation chamber 19, in which 30 UV lamps emitting with a wavelength of 185 nm are installed, is fed to said mixing chamber 1; this quantity is mixed with that one sucked in from outside. The quota of air drawn off is regulated according to the concentration of nascent oxygen required by the purifying process instant by instant. A computer processes the measurements of the concentrations of pollutants to be abated, detected by the real time analyzer 18 disposed inside said mixing chamber 1, and calculates the concentration of nascent oxygen required in real time by the purifying process; consequently, the computer controls regulation of the valve 17 and the number of UV lamps to be switched on. The quota of air drawn off is mixed with the air sucked in from outside, before being processed by the fan; the computer calculates the total quantity that concerns the fan and controls corresponding set-up of the inverter. Through the divergent conveyor 30 the flow of air passes into the mist reactor 3 inside which a battery of 40 atomizers 7 operating at 1 bar of overpressure delivering to the volume about 25 l/h of chemically active aqueous solution. The flow, saturated with particles of aqueous solution, is guided along a route characterized by sharp variations in direction; along said route, in the embodiment preferred by the inventors, a ZnO catalyst has been disposed, composed of a laminar structure mounted parallel to the flow of air, which, in presence of the drawn off flow enriched with nascent oxygen, promotes oxidation of the NO and of the Sulphur oxides present in the air to be purified and simultaneously promotes absorption of said oxides and of CO₂ into the particles of atomized water which condense on the surfaces. It must be noted that the extensive guide surfaces of the flow cause aggregation and condensation of the particles of aqueous solution after they have been charged with most of the pollutants giving rise to the absorption and chemical transformation step which is completed in the multistage regenerator 5. The aggregation and condensation product is collected on the base of the mist reactor 3 and discharged into the collection tank 5a of the multistage regenerator.

The multistage regenerator 5, in the embodiment preferred by the inventors, is composed of 3 tanks, each with a volume of approximately 100 litres, communicating with one another, the first of which, called collection tank 5a, through the action of suitable flocculants separates from the water the dusts, hydrocarbons and oils present. In the second tank, called reaction tank 5b, through the action of weak bases, the gases, absorbed in water during passing through the mist reactor and which have undergone natural transformation into the various acid compounds, are transformed into insoluble saline compounds; in the embodiment preferred by the inventors, the use of BaOH has been chosen for the reactions that take place in the second tank, in order to create non-polluting saline compounds. In the third tank, called reactivation tank 5c, the conditions of the water to be returned to the circuit, which leads to the atomizers of the mist reactor by means of an electric pump 6, are restored by controlling the pH using the pH-meter 8. Water is reactivated here by direct introduction of hydroxides of strong bases, such as NaOH or Ca(OH)₂, or oxides that give rise to the formation of strong bases, in order to promote absorption of new gases in water during the subsequent cycle.

The temperature of the aqueous solution thus prepared is controlled by the exchanger 10, produced with simple 300 W electrical resistances.

From the multistage regenerator a 100 l/h and 5 bar pumping unit 6 sucks in the aqueous solution prepared for the reaction and feeds it into the atomizers circuit 4. Downstream of the mist reactor 3 the flow passes through the sterilizer 11 where a battery of 10 lamps 28, emitting with a wavelength of 254 nm, eliminates bacteria, viruses and spores.

The flow then passes into the hydrodynamic dehumidifier 12; the sizing of this commercial component was established by determining that, operating on the saturated flow at a temperature of 30°C, it was able to withhold 60% of the water transported; as a result the hydrodynamic dehumidifier has a volume of approximately 300 litres.

From the first chamber of the dry reactor 14 a quota of the flow, by now mainly purified, is drawn off and, as described hereinbefore, is sent to the oxidation chamber 19.

On the remaining part of the flow the temperature is measured and corrected by means of the heat exchanger 15, so that the quantity of water not withheld by the hydrodynamic dehumidifier corresponds to the optimal RH for operation of the subsequent catalyst bed 20; calculation and control of this operation is performed by the computer which manages the entire operation of the cleaner.

The catalyst bed 20 is composed of a parallelepiped of 1600 x 1600 x 30 mm formed by 16 modules measuring 800 x 400 x 300 mm juxtaposed to form a monolithic unit. The base and the cover of the modules are produced with metal gratings. Each module contains about 2x10⁶ alumina spheres provided on the outer surface with a catalyst coating produced with a mixture based on noble metals such as Pt, Pd and Au, with transition elements belonging to the 4th period and in particular Mn, Ti and Fe, which are capable of fully exploiting their ability to assume several oxidation states passing from one oxidation state to another with minimum energy variations. In particular, the catalyst chosen was produced with Pt⁺², which guarantees a high redox power, in conjunction with iron present in the allotropic states of Fe⁺², Fe⁺³, and preferably Fe⁺⁴, which in this last configuration has the greatest oxidizing properties. The transitions of iron and platinum guarantee a high oxidizing power to the catalyst bed, and in particular are capable of oxidizing the CO and reducing the Ozone present in the pollutants even at low temperatures.

In some embodiments of the cleaner the catalyst bed 20 and the heat exchanger 15 can coincide in the same single structure; in fact, both said catalyst bed 20 and said heat exchanger 15 can be produced simultaneously in the form of catalyst radiator, i.e., with the structure of a common radiator which has the heat exchange surfaces coated in catalyst; in particular the aforesaid catalysts preferred by the Inventors can be distributed and fixed to the heat exchange surfaces of the radiators according to normal coating technology or the like.

The description of the cleaner in the embodiment preferred by the Inventors Is completed by observing the presence of the control board 31 in which is also housed the computer for management of the entire purifying process and the fact that the entire cleaner can be mounted on a single supporting structure 32 provided with levelling jacks 33 to facilitate transport.

Although the invention has been described in considerable detail, it will be apparent to those skilled in the art that modifications and variants may be made thereto without however departing from the field of the inventive concept.

In particular, the form and constructional dimensions of the cleaner depend each time on the characteristics peculiar to each application and on the specific installation requirements. For example, a cleaner to be installed to treat polluted air in a semi-closed car park will be designed in compliance with available spaces; a cleaner destined to treat air in road or motorway tunnels, besides particular problems of overall dimensions, will be sized for the specific pollutant loads of vehicle traffic pollution; a cleaner to treat volumes of polluted air in "open air" areas, such as roads or squares, stretches of roads or motorways or both outdoor and indoor environments in sites in which the air is polluted by chemical or biological products in general, will be characterized by different values of the flow rate to be treated; when the bactericidal effect is not required, the sterilizer can be omitted; on the contrary, the sterilization section can be strengthened for applications in which biological pollution is particularly critical.

Generally one or more components of the cleaner according to the invention can also be lacking or on the contrary be expanded and made more powerful in order to make the cleaner respondent to the needs of the users and to cope optimally with different concentrations of pollutants to be treated.

## Claims

1. A cleaner for air polluted by chemical, physical and biological pollution comprising:
- air suction means (2),
- an oxidation chamber (19),
- a catalyst bed (20),
**characterized in that** there is provided
- a mixing chamber (1) for polluted air and oxidized air,
- a mist reactor (3),
- a sterilizer (11)
- a hydrodynamic dehumidifier (12)
- a dry reactor (14), in which said catalyst bed (20) is arranged.

2. A cleaner as claimed in claim 1, wherein said suction means (2) are arranged inside the mixing chamber (1) and are suitable to produce a flow of air comprising polluted air and oxidized air coming from the oxidation chamber (19).

3. A cleaner as claimed in claim 2, wherein a real time analyzer (18) of first parameters of the polluted air is provided in said mixing chamber (1).

4. A cleaner as claimed in claim 3, wherein said first parameters are concentrations of pollutants, temperature and relative humidity.

5. A cleaner as claimed in any one of the previous claims, wherein control means (31) are provided comprising computerized means suitable to process, control and manage parameters of a purifying process.

6. A cleaner as claimed in any one of the previous claims, wherein said mist reactor (3) comprises atomizers (7) of a chemically active aqueous solution.

7. A cleaner as claimed in any one of the previous claims, wherein said sterilizer (11) comprises a first battery of UV lamps (28), with a wavelength of 254 nm.

8. A cleaner as claimed in any one of the previous claims, wherein said hydrodynamic dehumidifier (12) is suitable to take the flow to a predetermined value of relative humidity.

9. A cleaner as claimed in any one of the previous claims, wherein said dry reactor (14) comprises in a first zone a valve suitable to draw off and send a first part of the flow to the oxidation chamber (19).

10. A cleaner as claimed in claim 9, wherein said oxidation chamber (19) is provided with a second battery of UV lamps (29), at a wavelength of 185 nm, suitable to charge the flow of nascent oxygen.

11. A cleaner as claimed in any one of the previous claims, wherein said dry reactor (14) comprises a first heat exchanger (15) suitable to regulate the relative humidity of a second part of the flow.

12. A cleaner as claimed In any one of the previous claims, wherein said catalyst bed (20) is suitable for said second part of the flow to pass through, to complete purification, with Reynolds number ranging from 100 to 300.

13. A cleaner as claimed in any one of the previous claims, wherein an outlet conveyor (21) is provided to collect and discharge purified air outside.

14. A cleaner as claimed in any of the previous claims, wherein a multistage regenerator (5) is provided with a series of tanks positioned one after another, suitable to collect and chemically reactivate an aqueous solution discharged from the mist reactor (3) and from the hydrodynamic dehumidifier (12).

15. A cleaner as claimed in claim 14, wherein said regenerator (5) comprises at least a collection tank for said aqueous solution suitable to separate particles and oils present therein, a reaction tank to transform the gases, absorbed by the aqueous solution while passing through the mist reactor (3) into insoluble saline compounds and a tank for chemical reactivation of said solution.

16. A cleaner as claimed in claim 15, wherein there are provided stirring means (22) in said regenerator, suitable to keep the aqueous solution moving to promote dissolution of the compounds introduced.

17. A cleaner as claimed in claim 16, wherein there is provided a pH-meter in said regenerator (5).

18. A cleaner as claimed in claim 17, wherein there is provided a second heat exchanger (10) in said regenerator to regulate the temperature of the aqueous solution.

19. A cleaner as claimed in any one of the previous claims, wherein the lamps of the first battery are suitable to be activated in a variable number according to the sterilizing effect required.

20. A cleaner as claimed in any one of the previous claims, wherein the lamps of the second battery are suitable to be activated in a variable number according to the quantity of nascent oxygen required.

21. A cleaner as claimed in any one of the previous claims, wherein said catalyst bed (20) comprises a battery of laminar structures comprising particles of porous material with a large external surface, which may or may not be spherical, and coated with catalyst, preferably chosen from elements belonging to transition groups.

22. A cleaner according to the preceding claim, wherein said catalyst bed (20) is incorporated in the heat exchanger (15).

23. A cleaner as claimed in claim 21 or 22, wherein said battery of laminar structures is activated by means of internal energy.

24. A cleaner as claimed in claim 23, wherein said catalyst comprises combinations of noble metals such as Pt, Pd and Au with transition elements belonging to the 4th period and in particular Mn, Ti and Fe.

25. Process for purifying air polluted by chemical, physical and biological pollutants, using a cleaner as claimed in claim 1, comprising the steps of:
a) sucking, by means of suction means (2) polluted air inside a mixing chamber (1);
b) analyzing said polluted air, using a real time analyzer (18), and sending said values of first parameters to control means (31) to regulate process parameters;
c) producing a flow of air, in said mixing chamber (1), comprising said polluted air and oxidized air coming from an oxidation chamber (19);
d) feeding said flow into a mist reactor (3) so that the polluted particles transported by the flow are absorbed by a chemically active atomized aqueous solution;
e) sterilizing the flow, said flow lapping a second battery of lamps (28) of a sterilizer (11);
f) dehumidifying the flow by means of a hydrodynamic dehumidifier (12);
g) feeding the flow to a dry reactor (14) in which, by means of a valve (17), a first part of the flow is drawn off and sent to the oxidation chamber (19), and a second part is taken to predetermined conditions of relative humidity by means of a second heat exchanger (15);
h) feeding said second part of the flow through a catalyst bed (20) in order to oxidize remaining CO to CO2 and reduce 03 to 02, present in the pollutants, even at low temperatures.

26. Process as claimed in claim 25, wherein after step d) said atomized aqueous solution is collected at the discharge outlet of the mist reactor (3), together with a solution coming from the discharge outlet of the hydrodynamic dehumidifier (12) in a collection tank (5a) of the multistage regenerator (5) in which particles and oil are separated through the action of flocculants.

27. Process as claimed in claim 26, wherein gases absorbed by the aqueous solution while passing through the mist reactor (3) are transformed in a reaction tank (5b) into insoluble saline compounds.

28. Process as claimed in claim 27, wherein said aqueous solution is subjected to chemical reactivation in a reactivation tank (5c), by direct introduction of hydroxides of strong bases or oxides which give rise to the formation of strong bases in order to promote absorption of new gases in water during a subsequent cycle.

29. Process as claimed in claim 25, wherein in the oxidation chamber (19) said flow laps a first battery of lamps (29), which can be operated in variable number, becoming charged with nascent oxygen.

30. Process as claimed in claim 29, wherein the quantity of nascent oxygen is regulated by varying the number of lamps operating inside the oxidation chamber (19) and the concentration of said nascent oxygen is regulated by varying the flow rate of the first part of the air flow drawn off from the dry reactor (14).

31. Process as claimed in claim 25, wherein the minimum time for which the flow remains inside the mist reactor (3), in intimate contact with the chemically active aqueous solution, is greater than 1 second, preferably more than 5 seconds.

32. Process as claimed in claim 31, wherein catalysts operating wet based on oxidized compounds of Zn, Fe or Cu, or combinations thereof, are used in said mist reactor (3), to promote completion of oxidation of NOₓ and of sulphur oxides present in the flow, which are absorbed together with CO₂ by the particles of atomized aqueous solution.

## Patentansprüche

1. Reiniger für Luft, die mit Chemikalien, physikalischen und biologischen Verunreinigungen verschmutzt ist, umfassend:
Luftansaugmittel (2)
eine Oxidationskammer (19),
ein Katalysatorbett (20),
**dadurch gekennzeichnet, dass**
eine Mischkammer (1) für verunreinigte Luft und oxidierte Luft,
ein Nebelreaktor (3)
ein Sterilisator (11)
ein hydrodynamischer Trockner (12)
ein Trockenreaktor (14), in dem das Katalysatorbett (20) angeordnet ist, vorgesehen sind.

2. Reiniger nach Anspruch 1, bei dem die Ansaugmittel (2) in der Mischkammer (1) angeordnet sind und geeignet sind, einen Luftstrom zu erzeugen, der verunreinigte Luft und oxidierte Luft umfasst, die von der Oxidationskammer (19) kommt.

3. Reiniger nach Anspruch 2, bei dem ein Echtzeitanalysator (18) von ersten Parametern der verunreinigten Luft in der Mischkammer (1) vorgesehen ist.

4. Reiniger nach Anspruch 3, bei dem die ersten Parameter Konzentrationen von Schadstoffen, eine Temperatur und eine relativer Luftfeuchte sind.

5. Reiniger nach einem der vorhergehenden Ansprüche, bei dem Steuermittel (31) vorgesehen sind, die Computerbasierte Mittel umfassen, die geeignet sind, Parameter eines Reinigungsverfahrens zu verarbeiten, zu steuern und zu regeln.

6. Reiniger nach einem der vorhergehenden Ansprüche, bei dem der Nebelreaktor (3) Zerstäuber (7) einer chemisch aktiven wässrigen Lösung umfasst.

7. Reiniger nach einem der vorhergehenden Ansprüche, bei dem der Sterilisator (11) eine erste Zelle von UV-Lampen (28) mit einer Wellenlänge von 254 nm umfasst.

8. Reiniger nach einem der vorhergehenden Ansprüche, bei dem der hydrodynamische Trockner (12) geeignet ist, die Strömung auf einen vorbestimmten Wert relativer Luftfeuchte zu bringen.

9. Reiniger nach einem der vorhergehenden Ansprüche, bei dem der Trockenreaktor (14) in einer ersten Zone ein Ventil umfasst, das geeignet ist, einen ersten Teil des Stroms zur Oxidationskammer (19) abzusaugen und zu schicken.

10. Reiniger nach Anspruch 9, bei dem die Oxidationskammer (19) mit einer zweiten Zelle von UV-Lampen (29) mit einer Wellenlänge von 185 nm vorgesehen ist, die geeignet sind, den Strom von naszierendem Sauerstoff anzureichern.

11. Reiniger nach einem der vorhergehenden Ansprüche, bei dem der Trockenreaktor (14) einen ersten Wärmetauscher (15) umfasst, der geeignet ist, die relative Luftfeuchte eines zweiten Teils des Stroms zu regulieren.

12. Reiniger nach einem der vorhergehenden Ansprüche, bei dem das Katalysatorbett (20) zum Hindurchtreten des zweiten Teils des Stroms geeignet ist, um eine Reinigung mit einer Reynold-Zahl im Bereich von 100 bis 300 abzuschließen.

13. Reiniger nach einem der vorhergehenden Ansprüche, bei dem ein Abflussförderer (21) vorgesehen ist, um gereinigte Luft aufzufangen und nach außen abzugeben.

14. Reiniger nach einem der vorhergehenden Ansprüche, bei dem ein mehrstufiger Regenerator (5) mit einer Reihe von Tanks vorgesehen ist, die einer nach dem anderen angeordnet sind, die geeignet sind, eine wässrige Lösung aufzufangen und chemisch zu reaktivieren, die von dem Nebelreaktor (3) und von dem hydrodynamischen Trockner (12) abgeführt ist.

15. Reiniger nach Anspruch 14, bei dem der Regenerator (5) wenigstens einen Auffangtank für die wässrige Lösung, der geeignet ist, Teilchen und Öl, die darin enthalten sind, zu trennen, einen Reaktionstank zum Umwandeln der Gase, die von der wässrigen Lösung absorbiert sind, während des Tretens durch den Nebelreaktor (3), in unlösliche Saline-Komponenten, und einen Tank zum chemischen Reaktivieren der Lösung umfasst.

16. Reiniger nach Anspruch 15, bei dem Rührmittel (22) in dem Regenerator vorgesehen sind, die geeignet sind, die wässrige Lösung aufrecht zu erhalten, die sich bewegt, um eine Auflösung der eingebrachten Komponenten zu fördern.

17. Reiniger nach Anspruch 16, bei dem ein PH-Meter in dem Regenerator (5) vorgesehen ist.

18. Reiniger nach Anspruch 17, bei dem ein zweiter Wärmetauscher (10) in dem Regenerator vorgesehen ist, um die Temperatur der wässrigen Lösung zu regulieren.

19. Reiniger nach einem der vorhergehenden Ansprüche, bei dem die Lampen der ersten Zelle geeignet sind, auf verschiedene Weise aktiviert zu werden, gemäß der benötigten Sterilisierungswirkung.

20. Reiniger nach einem der vorhergehenden Ansprüche, bei dem die Lampen der zweiten Zelle geeignet sind, auf verschiedene Weise aktiviert zu werden, gemäß der Quantität des benötigen naszierenden Sauerstoffs.

21. Reiniger nach einem der vorhergehenden Ansprüche, bei dem das Katalysatorbett (20) eine Zelle von geschichteten Strukturen umfasst, die Teilchen von porösem Material mit einer großen Außenoberfläche umfassen, die kugelförmig sein können oder auch nicht, und mit einem Katalysator bedeckt sind, der vorzugsweise aus Elementen ausgewählt ist, die den Übergangsgruppen angehören.

22. Reiniger nach einem der vorhergehenden Ansprüche, bei dem das Katalysatorbett (20) in dem Wärmetauscher (15) enthalten ist.

23. Reiniger nach Anspruch 21 oder 22, bei dem die Zelle geschichteter Strukturen mittels einer inneren Energie aktiviert wird.

24. Reiniger nach Anspruch 23, bei dem der Katalysator Kombinationen von Edelmetallen, wie beispielsweise Pt, Pd und Au, wobei die Übergangselemente zur 4ten Periode gehören, und im Besonderen Mn, Ti und Fe umfasst.

25. Verfahren zur Reinigung von Luft, die von Chemikalien, physikalischen und biologischen Verunreinigungen verschmutzt ist, das einen Reiniger nach Anspruch 1 verwendet, umfassend die Schritte:
a) Ansaugen, mittels Ansaugmittel (2), von verunreinigter Luft in eine Mischkammer (1);
b) Analysieren der verunreinigten Luft unter Verwendung eines Echtzeitanalysators (18) und Senden der Werte von ersten Parametern an Steuermittel (31), um Verarbeitungsparameter zu regulieren;
c) Produzieren eines Luftstroms in der Mischkammer (1), der die verunreinigte Luft und oxidierte Luft umfasst, die von einer Oxidationskammer (19) kommt;
d) Zuführen des Stroms in einen Nebelreaktor (3), sodass die verunreinigten Teilchen, die von dem Strom transportiert werden, von einer chemisch aktiven zerstäubten wässrigen Lösung absorbiert werden;
e) Sterilisieren des Stroms, wobei der Strom eine zweite Zelle von Lampen (28) eines Sterilisators (11) umgibt;
f) Trocknen des Stroms mittels eines hydrodynamischen Trockners (12);
g) Zuführen des Stroms an einen Trockenreaktor (14), in dem, mittels eines Ventils (17), ein erster Teil des Stroms zur Oxidationskammer (19) abgesaugt und geschickt wird, und ein zweiter Teil auf vorbestimmte Bedingungen relativer Luftfeuchte mittels eines zweiten Wärmetauschers (15) gebracht wird;
h) Zuführen des zweiten Teils des Stroms durch ein Katalysatorbett (20), um verbleibendes CO bis CO2 zu oxidieren und 03 bis 02 zu reduzieren, die in den Schadstoffen vorhanden sind, selbst bei geringen Temperaturen.

26. Verfahren nach Anspruch 25, bei dem nach Schritt d) die zerstäubte wässrige Lösung am Abgabeauslass des Nebelreaktors (3) aufgefangen wird, zusammen mit einer Lösung, die von dem Abgabeauslass des hydrodynamischen Trockners (12) herkommt, in einem Auffangtank (5a) des vielstufigen Regenerators (5), in dem Teilchen und Öl durch die Wirkung von Flockungsmitteln getrennt werden.

27. Verfahren nach Anspruch 26, bei dem Gase, die von der wässrigen Lösung absorbiert werden, während sie durch den Nebelreaktor (3) treten, in einem Reaktionstank (5b) in unlöslich Saline-Komponenten umgewandelt werden.

28. Verfahren nach Anspruch 27, bei dem die wässrige Lösung einer chemischen Reaktivierung in einem Reaktivierungstank (5c) unterzogen wird, durch direktes Einbringen von Hydroxiden starker Basen oder Oxiden, die eine Ausbildung von starken Basen zur Folge haben, um eine Absorption von neuen Gasen in Wasser während eines darauf folgenden Zyklus zu fördern.

29. Verfahren nach Anspruch 25, bei dem in der Oxidationskammer (19) der Strom eine erste Zelle von Lampen (29) umgibt, die auf verschiedene Weise betrieben werden können, der mit naszierendem Sauerstoff angereichert wird.

30. Verfahren nach Anspruch 29, bei dem die Quantität von naszierendem Sauerstoff durch Variieren der Anzahl von Lampen reguliert wird, die in der Oxidationskammer (19) betrieben werden, und die Konzentration des naszierenden Sauerstoffs durch Variieren der Stromrate des ersten Teils des Luftstroms reguliert wird, der von dem Trockenreaktor (14) abgesaugt wird.

31. Verfahren nach Anspruch 25, bei dem die minimale Zeit, die der Strom in dem Nebelreaktor (3) in engem Kontakt mit der chemisch aktiven wässrigen Lösung verbleibt, größer als eine Sekunde, vorzugsweise größer als 5 Sekunden, ist.

32. Verfahren nach Anspruch 31, bei dem Katalysatoren, die wasserbasiert auf oxidierten Komponenten von Zn, Fe oder Cu arbeiten, oder Kombinationen davon, in dem Nebelreaktor (3) verwendet werden, um ein Abschließen der Oxidation von NOₓ und von Schwefeloxiden, die in dem Strom vorhanden sind, zu fördern, die zusammen mit CO₂ von den Teilchen der zerstäubten wässrigen Lösung absorbiert werden.

## Revendications

1. Purificateur destiné au traitement d'air pollué par une pollution chimique, physique et biologique, comprenant :
- un moyen d'aspiration de l'air (2) ;
- une chambre d'oxydation (19) ;
- un lit catalytique (20) ;
**caractérisé en ce qu'**il est équipé :
- d'une chambre de mélange (1) pour l'air pollué et l'air oxydé ;
- d'un réacteur à nébulisation (3) ;
- d'un stérilisateur (11) ;
- d'un déshumidificateur hydrodynamique (12) ;
- d'un réacteur à sec (14), dans lequel est disposé ledit lit catalytique (20).

2. Purificateur selon la revendication 1, dans lequel ledit moyen d'aspiration (2) est disposé à l'intérieur de la chambre de mélange (1) et est adapté pour produire un flux d'air comprenant de l'air pollué et de l'air oxydé provenant de la chambre d'oxydation (19).

3. Purificateur selon la revendication 2, dans lequel un analyseur en temps réel (18) des paramètres initiaux de l'air pollué est disposé dans ladite chambre de mélange (1).

4. Purificateur selon la revendication 3, dans lequel lesdits paramètres initiaux sont les concentrations en polluants, la température et l'humidité relative.

5. Purificateur selon l'une quelconque des revendications précédentes, dans lequel est disposé un moyen de commande (31) comprenant un moyen informatisé adapté pour traiter, commander et gérer les paramètres d'un processus de purification.

6. Purificateur selon l'une quelconque des revendications précédentes, dans lequel ledit réacteur à nébulisation (3) comporte des pulvérisateurs (7) nébulisant une solution aqueuse chimiquement active.

7. Purificateur selon l'une quelconque des revendications précédentes, dans lequel le stérilisateur (11) comporte une première batterie de lampes UV (28), avec une longueur d'onde de 254 nm.

8. Purificateur selon l'une quelconque des revendications précédentes, dans lequel ledit déshumidificateur hydrodynamique (12) est adapté pour amener le flux à une valeur prédéterminée d'humidité relative.

9. Purificateur selon l'une quelconque des revendications précédentes, dans lequel ledit réacteur à sec (14) comporte dans une première zone une soupape adaptée pour soutirer une première partie du flux et envoyer celle-ci à la chambre d'oxydation (19).

10. Purificateur selon la revendication 9, dans lequel ladite chambre d'oxydation (19) est équipée d'une seconde batterie de lampes UV (29), avec une longueur d'onde de 185 nm, adaptée pour charger le flux en oxygène naissant.

11. Purificateur selon l'une quelconque des revendications précédentes, dans lequel ledit réacteur à sec (14) comprend un premier échangeur de chaleur (15) adapté pour réguler l'humidité relative d'une seconde partie du flux.

12. Purificateur selon l'une quelconque des revendications précédentes, dans lequel ledit lit catalytique (20) est adapté pour être traversé par la seconde partie du flux, afin d'achever la purification, avec un nombre de Reynolds de l'ordre de 100 à 300.

13. Purificateur selon l'une quelconque des revendications précédentes, dans lequel est disposée une conduite d'évacuation (21) pour recueillir l'air purifié et le rejeter à l'extérieur.

14. Purificateur selon l'une quelconque des revendications précédentes, dans lequel est disposé un régénérateur multi étages (5) avec une série de réservoirs placés les uns derrière les autres, adapté pour recueillir et réactiver chimiquement une solution aqueuse évacuée du réacteur à nébulisation (3) et du déshumidificateur hydrodynamique (12).

15. Purificateur selon la revendication 14, dans lequel ledit régénérateur (5) comprend au moins un réservoir de recueil pour ladite solution aqueuse adapté pour séparer les particules et les huiles présentes dans celle-ci, un réservoir de réaction destiné à la transformation des gaz, absorbés par la solution aqueuse lors de leur passage à travers le réacteur à nébulisation (3), en composés salins insolubles, et un réservoir destiné à la réactivation chimique de ladite solution.

16. Purificateur selon la revendication 15, dans lequel est disposé à l'intérieur dudit régénérateur un moyen de brassage (22), adapté pour maintenir la solution aqueuse en mouvement de façon à favoriser la dissolution des composants introduits.

17. Purificateur selon la revendication 16, dans lequel un pH-mètre est disposé dans ledit régénérateur (5).

18. Purificateur selon la revendication 17, dans lequel est disposé dans ledit régénérateur un second échangeur de chaleur (10) pour réguler la température de la solution aqueuse.

19. Purificateur selon l'une quelconque des revendications précédentes, dans lequel les lampes de la première batterie sont adaptées pour être mises en action en nombre variable selon l'effet stérilisant exigé.

20. Purificateur selon l'une quelconque des revendications précédentes, dans lequel les lampes de la seconde batterie sont adaptées pour être mises en action en nombre variable selon la quantité d'oxygène naissant exigée.

21. Purificateur selon l'une quelconque des revendications précédentes, dans lequel ledit lit catalytique (20) comporte une batterie de structures laminaires comprenant des particules de matériau poreux avec une surface extérieure importante, lesquelles peuvent être ou ne pas être sphériques, et recouvertes par un catalyseur, de préférence choisi parmi des éléments appartenant aux groupes de transition.

22. Purificateur selon la revendication précédente, dans lequel ledit lit catalytique (20) est incorporé dans l'échangeur de chaleur (15).

23. Purificateur selon la revendication 21 ou 22, dans lequel ladite batterie de structures laminaires est activée au moyen d'énergie interne.

24. Purificateur selon la revendication 23, dans lequel ledit catalyseur comprend des combinaisons de métaux nobles tels que Pt, Pd et l'Au avec des éléments de transition appartenant à la quatrième période et en particulier le Mn, Ti et Fe.

25. Procédé destiné à la purification d'air pollué par des polluants chimiques, physiques et biologiques, utilisant un purificateur selon la revendication 1, comprenant les étapes de :
a) aspiration, grâce à un moyen d'aspiration (2), d'air pollué à l'intérieur d'une chambre de mélange (1) :
b) analyse dudit air pollué en utilisant un analyseur en temps réel (18), et envoi desdites valeurs initiales des paramètres à un moyen de commande (31) pour régler les paramètres du procédé ;
c) production d'un flux d'air, dans ladite chambre de mélange (1), comportant ledit air pollué et de l'air oxydé en provenance d'une chambre d'oxydation (19) ;
d) conduction dudit flux à l'intérieur d'un réacteur à nébulisation (3) afin que les particules polluées transportées par le flux soient absorbées par une solution aqueuse nébulisée chimiquement active ;
e) stérilisation du flux, ledit flux passant autour d'une seconde batterie de lampes (28) d'un stérilisateur (11) ;
f) déshumidification du flux par le moyen d'un déshumidificateur hydrodynamique (12) ;
g) conduction du flux à un réacteur à sec (14) dans lequel, par le moyen d'une soupape (17), une première partie du flux est soutirée et envoyée à la chambre d'oxydation (19), et une seconde partie est amenée à des conditions prédéterminées d'humidité relative par le moyen d'un second échangeur de chaleur (15) ;
h) conduction de ladite seconde partie du flux à travers un lit catalytique (20) dans le but d'oxyder le CO restant en CO₂ et de réduire O₃ en O₂, présents dans les polluants, même à de basses températures.

26. Procédé selon la revendication 25, dans lequel après l'étape d) ladite solution aqueuse nébulisée est recueillie à l'orifice d'évacuation du réacteur à nébulisation (3), ensemble avec une solution provenant de l'orifice d'évacuation du déshumidificateur hydrodynamique (12) dans un réservoir de collecte (5a) du régénérateur multi étages (5) dans lequel les particules et l'huile sont séparés grâce à l'action de floculants.

27. Procédé selon la revendication 26, dans lequel les gaz absorbés par la solution aqueuse quand ils passent à travers le réacteur à nébulisation (3) sont transformés dans un réservoir de réaction (5b) en composés salins insolubles.

28. Procédé selon la revendication 27, dans lequel ladite solution aqueuse est soumise à une réactivation chimique dans un réservoir de réactivation (5c), par l'introduction directe d'hydroxydes de bases fortes ou d'oxydes qui donnent naissance à la formation de bases fortes dans le but de favoriser l'absorption de nouveaux gaz dans l'eau au cours d'un cycle suivant.

29. Procédé selon la revendication 25, dans lequel à l'intérieur de la chambre d'oxydation (19) ledit flux passe autour d'une première batterie de lampes (29), celles-ci pouvant être mises en action en nombre variable, en se chargeant en oxygène naissant.

30. Procédé selon la revendication 29, dans lequel la quantité d'oxygène naissant est réglée en modifiant le nombre de lampes en fonctionnement à l'intérieur de la chambre d'oxydation (19) et où la concentration dudit oxygène naissant est réglée en faisant varier la vitesse du flux de la première partie du flux d'air extrait du réacteur à sec (14).

31. Procédé selon la revendication 25, dans lequel la durée minimale du temps pendant lequel le flux demeure à l'intérieur du réacteur à nébulisation (3), en contact intime avec la solution aqueuse chimiquement active, est supérieure à 1 seconde, et de préférence supérieure à 5 secondes.

32. Procédé selon la revendication 31, dans lequel des catalyseurs opérant en milieu liquide basés sur des composés oxydés de Zn, Fe ou Cu , ou sur des combinaisons de ceux-ci, sont utilisés dans ledit réacteur à nébulisation (3) pour favoriser l'achèvement de l'oxydation de NOₓ et des oxydes de soufre présents dans le flux, qui sont absorbés ensemble avec le CO₂ par les particules de la solution aqueuse nébulisée.
